# EUROPEAN PATENT APPLICATION

(11) **EP 2 860 922 A1**
(43) Date of publication of application: **15.04.2015**
(21) Application number: 13823155.0
(22) Date of filing: 15.07.2013
(51) Int. Cl.: H04L 12/857

(54) **METHOD AND APPARATUS FOR DETERMINING SCHEDULING POLICY**

(30) Priority: 26.07.2012 CN 201210261348
(71) Applicant: ZTE Corporation, Shenzhen, Guangdong 518057 (CN)
(72) Inventor: ZHANG, Yu, Shenzhen Guangdong 518057 (CN)
(74) Representative: Gevers Patents
(86) International application number: PCT/CN2013/079405
(87) International publication number: WO 2014/015748

(57) **Abstract**

The disclosure discloses a method and apparatus for determining a scheduling policy. Wherein this method includes determining a Quality of Service (QoS) identifier corresponding to an Asynchronous Transfer Mode (ATM) cell, encapsulating the QoS identifier into a pseudo-wire message, and determining the scheduling policy corresponding to the pseudo-wire message according to the QoS identifier. Through the disclosure, when the ATM cell enters a Packet Transmit Network (PTN), the QoS identifier corresponding to the ATM cell is determined, and then the QoS identifier is encapsulated into the pseudo-wire message, and then the scheduling policy corresponding to the pseudo-wire message is determined according to the QoS identifier, which solves the problem that in the related art different ATM services implementing a differentiated service in a PTN network is not presented, improves flexibility of priority configuration of the ATM service, makes an operating company to be able to perform more flexible service configuration by using a PTN device, still further meets differentiated service requirements of clients of different priorities.

## Description

### FIELD

The disclosure relates to the field of telecommunications, and specifically relates to a method and apparatus for determining a scheduling policy.

### BACKGROUND

With the advance of an ALL Internet Protocol (IP), the IP network, namely the packetized network, has become a tendency of network technological evolution. A Packet Transmit Network (PTN) device has been also widely applied gradually in the field of mobile backhaul and metropolitan area bearing. The PTN, which is totally based on packetized transmission and is also connection oriented, can provide an end-to-end service bearing capability, solves a problem that there is no connection for a traditional packet network, and is convenient for telecom-level application. In addition, the PTN provides an Operation Administration and Maintenance (OAM) function based on connection, namely the function of error detection, channel state monitoring and protection switching, making the PTN more aligned with the telecom-level application. The PTN is a developing tendency of a future transmit network.

An Asynchronous Transfer Mode (ATM) technique is a cell based switching and multiplexing technique; a base carrier for an ATM to transmit a message is an ATM cell, a connection is identified by a Virtual Path Identifier (VPI) and Virtual Channel Identifier (VCI) in a cell head. An ATM network provides five services, namely five ATM services, which separately are a Constant Bit Rate (CBR), a Variable Bit Rate (VBR)-rt, a VBR-nrt, an Unspecified Bit Rate (UBR) and an Available Bit Rate (ABR), and provides different Quality of Service (QoS) arming at a different service. In simple terms, it can be recognized that a priority level of the above five services, from high to low, in sequence is: CBR>VBR-rt>VBR-nrt>ABR>UBR. When an ATM service accesses the PTN, in order to guarantee service quality requirements of different ATM services, a service level of each ATM service is needed to be identified, that is a priority level of the ATM service is mapped to an EXP field in a pseudo-wire message. However, in the related art, there is no method in which different strategies are employed corresponding to the priorities of different services when the ATM service accesses the PTN.

So far, no effective solution has been proposed to solve the problem that different ATM services implementing a differentiated service in the PTN is not presented in the related art.

### SUMMARY

To solve the problem that in the related art different ATM services implementing the differentiated service in the PTN network is not presented, embodiments of the disclosure provide a method and apparatus for determining a scheduling policy.

According to an aspect of the embodiments of the disclosure, a method for determining a scheduling policy is provided, and the method includes determining a QoS identifier corresponding to an ATM cell, encapsulating the above QoS identifier into a pseudo-wire message, and determining a scheduling policy corresponding to the above pseudo-wire message according to the above QoS identifier.

Before determining the QoS identifier corresponding to the ATM cell, the above method may further include configuring a mapping relationship between the above ATM cell and the above QoS identifier.

Determining the QoS identifier corresponding to the ATM cell may include determining the QoS identifier corresponding to the above ATM cell according to a VPIA/CI value in the above ATM cell.

Determining the above QoS identifier corresponding to the ATM cell according to the VPI/VCI value in the above ATM cell may include judging whether the QoS identifier matching the VPI/VCI value in the above ATM cell exists according to the above mapping relationship; if the matched QoS identifier exists, then determining the above QoS identifier corresponding to the above ATM cell; and if the matched QoS identifier does not exist, then determining a default QoS identifier as the above QoS identifier corresponding to the above ATM cell.

A value of the above default QoS identifier may be 5.

Setting the mapping relationship between the above ATM cell and the above QoS identifier may include configuring, through a port mapping way, and/or a Virtual Passage Connection (VPC) mapping way, and/or a Virtual Channel Connection (VCC) mapping way, the mapping relationship between the above ATM cell and the above QoS identifier.

The above port mapping way may be building the mapping relationship between the above ATM cell on a port and the same above QoS identifier.

The above VPC mapping way may be building the mapping relationship between the above ATM cell on the port of which the VPI value is equal to a first assigned value, and the same above QoS identifier.

The above VCC mapping way may be building a mapping relationship between all above ATM cells on the port of which the VPI/VCI values are equal to the first assigned value/a second assigned value, and the same above QoS identifier.

Encapsulating the above QoS identifier into the above pseudo-wire message may include: if a corresponding relationship between the above QoS identifier and the above pseudo-wire message is one-to-one, encapsulating the above QoS identifier into the above pseudo-wire message; and if the corresponding relationship between the above QoS identifier and the above pseudo-wire message is many-to-one, then selecting one QoS identifier from multiple above QoS identities, and encapsulating the selected QoS identifier into the above pseudo-wire message.

Selecting one QoS identifier from multiple above Coos identities may include selecting one QoS identifier from multiple above QoS identities according to a priority selection algorithm.

Encapsulating the above QoS identifier into the pseudo-wire message may include: encapsulating the above QoS identifier into an EXP field of the above pseudo-wire message.

After the determining the scheduling policy corresponding to the above pseudo-wire message according to the above QoS identifier, the above method may further include performing a priority scheduling operation on the above pseudo-wire message according to the above scheduling policy.

According to another aspect of the embodiment of the disclosure, an apparatus for determining a scheduling policy is provided which includes: an identifier determining module, configured to determine a QoS identifier corresponding to an ATM cell; an encapsulating module, configured to encapsulate the above QoS identifier determined by the above identifier determining module into a pseudo-wire message; and a policy determining module, configured to determine the scheduling policy corresponding to the above pseudo-wire message according to the above QoS identifier.

The above apparatus may further include a mapping relationship setting module, configured to set a mapping relationship between the above ATM cell and the above QoS identifier.

The above identifier determining module may include an identifier determining unit configured to determine the above QoS identifier corresponding to the above ATM cell according to a VPI/ VCI value in the above ATM cell.

The above identifier determining unit may include: an identifier judging subunit, configured to judge whether the above QoS identifier matching the VPI/VCI value in the above ATM cell exists according to the above mapping relationship; a first determining subunit configured to, when a judgment result of the above identifier judging subunit is that the matched above QoS identifier exists, determine the above QoS identifier corresponding to the above ATM cell; and a second determining subunit configured to, when the judgment result of the above identifier judging subunit is that the matched above QoS identifier does not exist, determine a default QoS identifier as the above QoS identifier corresponding to the above ATM cell.

The above encapsulating module may include: a first encapsulating unit configured to, when a corresponding relationship between the above QoS identifier and the above pseudo-wire message is one-to-one, encapsulate the above QoS identifier into the above pseudo-wire message; or a second encapsulating unit configured to, when the corresponding relationship between the above QoS identifier and the above pseudo-wire message is many-to-one, select one QoS identifier from multiple QoS identities, and encapsulate the selected QoS identifier into the above pseudo-wire message.

The above second encapsulating unit may be configured to, when selecting one QoS identifier from multiple said QoS identities, select one QoS identifier from the multiple QoS identities according to a priority selection algorithm.

The above apparatus may further include a scheduling module configured to perform a priority scheduling operation on the above pseudo-wire message according to the above scheduling policy.

Through the embodiments of the disclosure, when the ATM cell enters the PTN, the QoS identifier corresponding to the ATM cell is determined, and then the QoS identifier is encapsulated into the pseudo-wire message, and then the scheduling policy corresponding to the above pseudo-wire message is determined according to the above QoS identifier, which solves the problem that in the related art different ATM services implementing the differentiated service in the PTN is not presented, improves flexibility of priority configuration of the ATM service, makes an operating company to be able to perform more flexible service settings by using a PTN device, still further meets differentiated service requirements of clients of different priorities.

### BRIEF DESCRIPTION OF THE DRAWINGS

Appended drawings explained here are used to provide further understanding of the embodiments of the disclosure, and construct a part of the application. A schematic embodiment and explanation thereof are used to explain the disclosure, and do not construct limitation to the disclosure. In the appended drawings:
Fig. 1 is a flow chart of a method for determining a scheduling policy according to an embodiment of the disclosure;
Fig. 2 is a structure diagram of an apparatus for determining a scheduling policy according to an embodiment of the disclosure;
Fig. 3 is a first structure diagram of the apparatus for determining a scheduling policy according to an embodiment of the disclosure;
Fig. 4 is a second structure diagram of the apparatus for determining a scheduling policy according to an embodiment of the disclosure;
Fig. 5 is a schematic view of networking for implementing an ATM QoS function according to an embodiment of the disclosure;
Fig. 6 is a schematic view showing a process of a data stream flowing each processing unit according to an embodiment of the disclosure; and
Fig. 7 is a flow chart showing a QoS scheduling policy according to an embodiment of the disclosure.

### DETAILED DESCRIPTION

In the following description, the disclosure will be explained in detail with reference to the appended drawings and in combination with the embodiments. It should be explained that without conflict the embodiments in the application and the characters in the embodiments may be combined with each other.

The embodiments of the disclosure provides a method and an apparatus for determining a scheduling policy. Detail explanation is performed through the embodiments in the following.

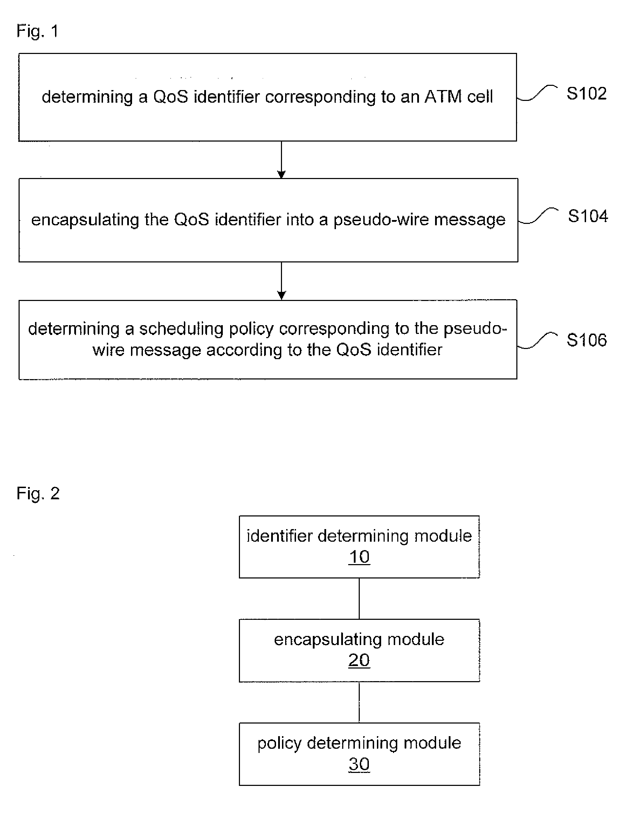

An embodiment of the disclosure provides a method for determining a scheduling policy, the method is generally applied at a PTN device side. Fig. 1 is a flow chart of the method for determining a scheduling policy according to the embodiment of the disclosure. As shown in Fig. 1, this method includes the following steps:
Step S102: determining a QoS identifier corresponding to an ATM cell;
Step S104: encapsulating the above QoS identifier into a pseudo-wire message; and
Step S106: determining a scheduling policy corresponding to the above pseudo-wire according to the above QoS identifier.

Through the above embodiment, when the ATM cell enters the PTN, the QoS identifier corresponding to the ATM cell is determined, and then the determined QoS identifier is encapsulated into the pseudo-wire message, and then the scheduling policy corresponding to the above pseudo-wire message is determined according to the above QoS identifier, thereby solving the problem that in the related art different ATM services implementing a differentiated service in the PTN is not presented, improving the flexibility of priority configuration of the ATM service, making an operating company to be able to perform more flexible service configuration by using the PTN device, and still further meeting the differentiated service requirements of clients of different priorities.

Before determining the QoS identifier corresponding to the ATM cell, in order to obtain the QoS identifier corresponding to the ATM cell more easily, this embodiment provides an embodiment, that is, before determining the QoS identifier corresponding to the ATM cell, a mapping relationship between the above ATM cell and the above QoS identifier may be configured first.

There are several configuration ways; the embodiment of the disclosure provides three implementing ways to introduce the configuration way for the mapping relationship between the ATM cell and the QoS identifier. Configuring the above mapping relationship may be implemented by at least one of the following ways: a port mapping way, a VPC mapping way, and a VCC mapping way;
wherein the port mapping way is referred to building a mapping relationship between an ATM cell on a port and a same QoS identifier, namely mapping all the ATM cells on the port to one QoS identifier;
the VPC mapping way is also called a port+VPI way, and is referred to building a mapping relationship between a same QoS identifier and an ATM cell on the above port of which a VPI value is equal to a first assigned value, namely mapping all ATM cells on this port, of which VPI values are equal to a first assigned value, to one QoS identifier. Here, the value of the first assigned value may be determined according to an actual situation.

The VCC mapping way is also called a port+VPI/VCI way, and is referred to building a mapping relationship between all ATM cells on the port of which the VPI/VCI values are equal to the first assigned value/a second assigned value, and a same QoS identifier, namely mapping the ATM cell on this port of which the VPI/VCI values are equal to the first assigned value/a second assigned value to one QoS identifier. The value of the first assigned value/second assigned value may be determined according to the actual situation. The VPI value corresponds to a first assigned value, and the VCI value corresponds to the second assigned value.

The above three mapping ways may be coexistent, and a very flexible priority policy may be obtained through a combination of the three mapping ways. In the above three mapping ways, the VCC mapping way is the most accurate one, the VPC mapping way takes the second place, and the port mapping way is the least accurate one.

When determining a QoS identifier corresponding to an ATM cell, it may be selected that the QoS identifier corresponding to the ATM cell is determined according to the VPI/VCI value in the ATM cell. Specifically, according to the above mapping relationship, it is determined whether a QoS identifier matching the VPI/VCI value in the ATM cell exists; if the matched QoS identifier exists, then the QoS identifier corresponding to the above ATM cell is determined; and if the matched above QoS identifier does not exist, then a default QoS identifier is taken as the above QoS identifier corresponding to the above ATM cell. The value of the above default QoS identifier is generally set as 5.

After the ATM cell enters the PTN device, and when a predetermined mapping relationship is to be used for mapping according to the VPI/VCI value in the ATM cell, first an exact mapping relationship is adopted, then a fuzzy mapping relationship is adopted, and at last a corresponding QoS identifier is obtained. If multiple mapping relationships may be applicable to one ATM cell simultaneously, then the most exact mapping relationship serves as a norm. If no mapping relationship is available, then the default QoS identifier is set.

In Step S104, when the QoS identifier is encapsulated into a pseudo-wire message, there are different encapsulating ways according to different corresponding relationships between the priority and the pseudo-wire message. When encapsulating is conducted, there are the following scenes: 1) the corresponding relationship between the priority and the pseudo-wire message is one-to-one, namely in the scenes of 1:1 VPC, 1:1 VCC and N:1 single cascading, one particular pseudo-wire message can only corresponds to one ATM cell at this time, namely the QoS identifier corresponding to the pseudo-wire message is unique, and the corresponding QoS identifier is directly mapped to an EXP field of a pseudo-wire; 2) the corresponding relationship between the priority and the pseudo-wire message is many-to-one, namely in the scene of N:1 multiple-cell cascading, if all the priorities for connection in this pseudo-wire message are the same, then a unique QoS identifier can also be obtained; if the priorities for ATM connection in the pseudo-wire are not consistent, then one pseudo-wire message may corresponds to multiple priorities, and one QoS identifier is needed to be obtained according to the priority selection algorithm to be provided into the EXP field of the pseudo-wire. Multiple kinds of priority selection algorithms may be pre-defined, different selection policies may be applied by a user according to the requirement for actual application.

Based on the above two scenes, this embodiment provides an implementing way, namely if a corresponding relationship between the QoS identifier and the pseudo-wire message is one-to-one, then the QoS identifier is encapsulated into the above pseudo-wire message; and if the corresponding relationship between the QoS identifier and the pseudo-wire message is many-to-one, one QoS identifier is selected from multiple QoS identities, and the selected QoS identifier is encapsulated into the above pseudo-wire message. When one QoS identifier is selected from multiply QoS identities, according to the priority selection algorithm introduced above, one QoS identifier from the multiply QoS identities is selected. Encapsulating the QoS identifier into the pseudo-wire message is encapsulating the QoS identifier into the EXP field of the pseudo-wire message.

After determining the scheduling policy corresponding to the pseudo-wire according to the QoS identifier, with regard to the pseudo-wire messages having different EXP values, a corresponding processing policy is queried according to the QoS identifier, namely according to a corresponding scheduling policy, a priority scheduling operation is performed for the corresponding pseudo-wire messages to send the pseudo-wire messages having different EXP values to different data queues, thus implementing scheduling having different priorities for the pseudo-wire messages, and the message having low priority is discarded when congestion appears.

Corresponding to the above method for determining the scheduling policy, an embodiment provides an apparatus for determining a scheduling policy. This apparatus is generally provided on a PTN device, and is used to implement the embodiment of the method for determining a scheduling policy. Fig. 2 is a structure diagram of the apparatus for determining a scheduling policy according to the embodiment of the disclosure. As shown in Fig. 2, this apparatus includes an identifier determining module 10, an encapsulating module 20, and a policy determining module 30. This structure is explained below.

The identifier determining module 10 is configured to determine a QoS identifier corresponding to an ATM cell;
the encapsulating module 20 is connected to the identifier determining module 10, and is configured to encapsulate the above QoS identifier determined by the above identifier determining module 10 into a pseudo-wire message; and
the policy determining module 30 is connected to the encapsulating module 20, and is configured to determine the scheduling policy corresponding to the above pseudo-wire message according to the above QoS identifier.

Through the above embodiment, when the ATM cell enters the PTN, the QoS identifier corresponding to the ATM cell is determined by the identifier determining module 10, and then the determined QoS identifier is encapsulated into the pseudo-wire message by the encapsulating module 20, and then the scheduling policy corresponding to the above pseudo-wire message is determined by the policy determining module 30 according to the determined QoS identifier, which solves the problem that in the related art different ATM services implementing the differentiated service in the PTN is not presented, improves the flexibility of priority configuration of the ATM service, makes the operating company to be able to perform more flexible service configuration by using the PTN device, still further meets the differentiated service requirements of clients of different priorities.

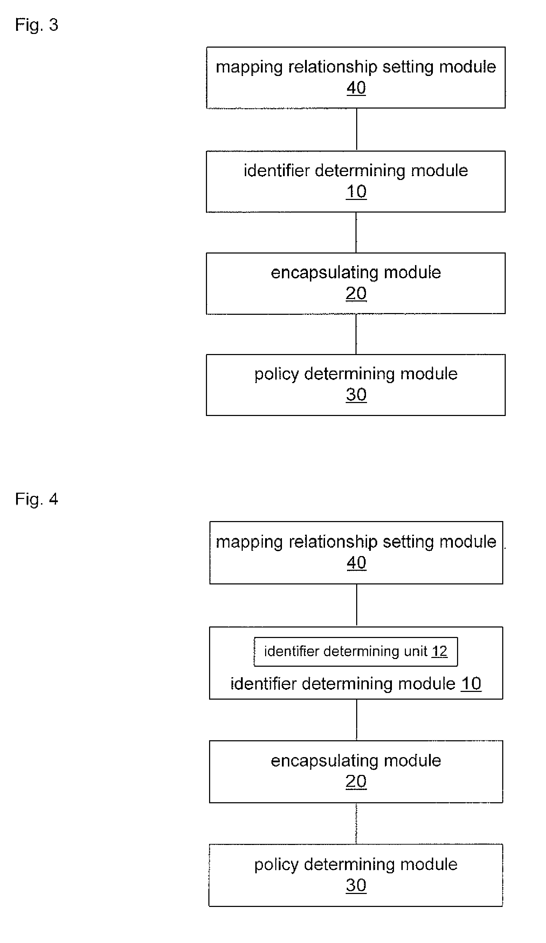

Fig. 3 is a first structure diagram of the apparatus for determining a scheduling policy according to an embodiment of the disclosure. As shown in Fig. 3, besides the each module in above Fig. 2, this apparatus may further include a mapping relationship setting module 40, connected to the identifier determining module 10, and configured to set a mapping relationship between an ATM cell and a QoS identifier. The specific configuration way has been introduced above, and is not repeated here.

Fig. 4 is a second structure diagram of the apparatus for determining a scheduling policy according to an embodiment of the disclosure. As shown in Fig. 4, besides that the apparatus includes each module in Fig. 3, the above identifier determining module 10 may further include an identifier determining unit 12, configured to determine, according to a VPI/VCI value in the ATM cell, the QoS identifier corresponding to the ATM cell.

The above identifier determining unit 12 may further include: an identifier judging subunit, configured to judge, according to the above mapping relationship, whether the QoS identifier matching the VPI/VCI value exists in the ATM cell; a first determining subunit, configured to, when the judging result of the identifier judging subunit is that the matched QoS identifier exists, determine the QoS identifier corresponding to the above ATM cell; and a second determining subunit, configured to, when the judging result of the above identifier judging subunit is that the matched QoS identifier does not exist, determine the default QoS identifier as the QoS identifier corresponding to the above ATM cell.

When the QoS identifier is encapsulated into the pseudo-wire message, there are different encapsulating ways according to different corresponding relationships between the priority and the pseudo-wire message. Therefore, this embodiment provides an implementing way, namely the above encapsulating module 20 includes: a first encapsulating unit, configured to when a corresponding relationship between the above QoS identifier and the above pseudo-wire message is one-to-one, encapsulate the above QoS identifier into the above pseudo-wire message; or a second encapsulating unit, configured to when a corresponding relationship between the above QoS identifier and the above pseudo-wire message is many-to-one, select one QoS identifier from multiple above identities, and encapsulate the selected QoS identifier into the above pseudo-wire message.

The second encapsulating unit, when selecting one QoS identifier from multiple said QoS identities, is configured to select one QoS identifier from multiple above QoS identities according to a priority selection algorithm. After determining the scheduling policy corresponding to the pseudo-wire message according to the QoS identifier, with regard to the pseudo-wire messages of different EXP values, a corresponding processing policy is queried according to the QoS identifier. The above apparatus may further include a scheduling module, configured to perform priority scheduling operation for the above pseudo-wire message according to the above scheduling policy.

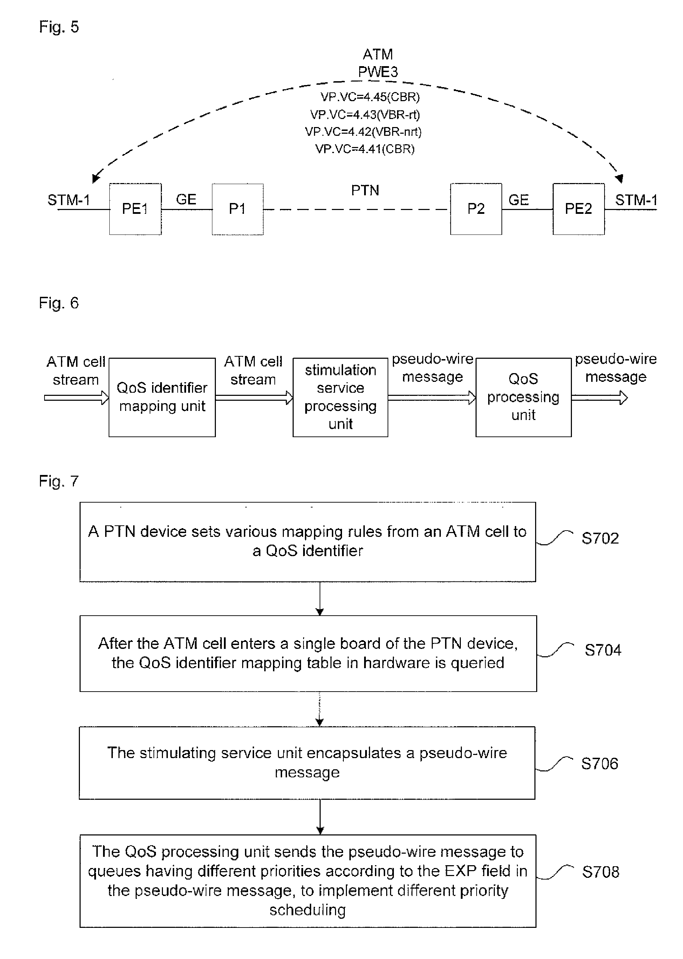

The implementation process of the above embodiment is explained in detail below in combination with an embodiment and the appended drawing. In an ATM network, a data stream using VPI+VCI to identify an ATM service, after entering the PTN, may carry different ATM services in different pseudo-wires. In the same channel, different pseudo-wires may be configured with different priorities, namely the corresponding QoS priorities are different. Fig. 5 is a schematic view of networking for implementing an ATM QoS function according to an embodiment of the disclosure. As shown in Fig. 5, the network elements of a network composed for implementing the ATM QoS function includes: PE1, P1, P2, and PE2, wherein the P1 and P2 are connected through the PTN, wherein PE is an abbreviation of Provider Edge, and P is the abbreviation of Provider. In Fig. 5, VP.VC=4.45 and VP.VC=4.41 are the data stream of CBR, which has the highest priority; VP.VC=4.42 is the data stream of VBR-nrt which has the lowest priority, and VP.VC=4.43 is the data stream of VBR-rt, of which the priority is lower than that of the CBR and higher than that of the VBR-nrt. When entering the PTN from the ATM network, the above data stream may be mapped to different priorities. With regard to the ATM service which is also a CBR data stream, different priorities may be provided based on the VP.VC in the ATM cell.

Fig. 6 is a schematic view showing process of a data stream flowing each processing unit according to an embodiment of the disclosure. As shown in Fig. 6, the PTN device includes a QoS identifier mapping unit, a simulation service processing unit, and a QoS processing unit. The function of the above three units are introduced separately below.

The QoS identifier mapping unit, of which the function is identical to that of the mapping relationship setting module and the identifier determining module in the above embodiment, is configured to store a mapping rule between the ATM cell and the QoS identifier, and when the ATM cell passes this unit, the corresponding QoS identifier is queried according to the PORT/VPI/VCI.

The simulation service processing unit, of which the function is identical to the encapsulating module in the above embodiment, is configured to take charge of encapsulating a pseudo-wire message, and writing the value of the QoS identifier into the EXP field of the pseudo-wire message.

The QoS processing unit, of which the function is identical to the strategy determining module and the scheduling module in the above embodiment, is configured to perform different priority scheduling for the pseudo-wire message according to the EXP field in the pseudo-wire message.

Based on the QoS identifier mapping unit in the above embodiment, the stimulation service processing unit, the QoS processing unit in the above embodiment, a process of the QoS scheduling policy is introduced below. Fig. 7 is a flow chart showing a QoS scheduling policy according to an embodiment of the disclosure. As shown in Fig. 7, this process includes the following steps.

Step S702 is that the PTN device sets various rules for mapping from the ATM cell to the QoS identifier; with regard to the same ATM cell, various mapping rules may be set, but the same kind of rules or the rules of which keywords are identical can only be set with one mapping rule, if multiple mapping rules are set, then the final setting may come into force. A QoS identifier mapping table is provided on a single board for processing the ATM service through hardware to store these rules.

Step S704 is that after the ATM cell enters the single board of the PTN device, the QoS identifier mapping table in the hardware is queried; if a unique QoS identifier is matched with the ATM cell, then the corresponding QoS identifier is obtained; if multiple QoS identifiers are matched with the ATM cell, then the QoS identifier in the most exact rule is selected, wherein the VCC rule is the most exact one, the VPC rule takes the second place, and the port rule is then the fuzziest one. If no table item matches, then the default QoS identifier is obtained which is 5, and the obtained QoS identifier, accompanying with the ATM cell, enters together the stimulation service processing unit for processing.

Step S706 is that the stimulating service unit encapsulates the pseudo-wire message. If one pseudo-wire message only corresponds to one QoS identifier, namely in the scene of 1:1 VPC,1:1 VCC and N:1 non-cascading, then the corresponding QoS identifier is directly provided into the EXP field of the pseudo-wire; if one pseudo-wire message corresponds to multiple QoS identities, namely in the scene of N:1 multiple-cell cascading, and the ATM connection is set with different priorities in the ATM connection, then one QoS identifier is obtained according to the priority section algorithm and provided into the EXP field of the pseudo-wire message.

Step S708 is that the QoS processing unit sends the pseudo-wire message to queues having different priorities according to the EXP field in the pseudo-wire message, to implement different priority scheduling, thus achieving the purpose of processing the ATM service data stream diversely.

Different priorities are set by the operating companies for the ATM data streams of two services of a base station, namely the data and voice services; differentiated processing is performed after the ATM data streams enter the PTN network, and prior processing of the voice service is guaranteed when the congestion appears.

It can be seen from the above description that, in the embodiment of the disclosure, when the data streams enter the PTN from the ATM network, the priorities of different cell streams are obtained according to the VPI/VCI value; the differentiated service is implemented in the PTN for different ATM services. Different priority policies may be set in the PTN edge device according to the VPI/VCI value of the ATM cell, and differentiated scheduling is implemented for different ATM services. More flexible service setting could be made by the operating companies using equipment, to meet differentiated service requirements of clients having different priorities. Priority setting for the mapping provides multiple layers of rules, making priority setting very flexible, and being able to achieve a prospective effect in a relative concise configuration.

Obviously, it should be understood by those skilled in the art that each module or each step of the above embodiment of the disclosure may be implemented by an universal computer apparatus, and may be concentrated in a single computer apparatus, or be distributed in the network composed of multiple computer apparatus, and preferably they may be implemented through program codes which could be executed by the computer apparatus, thus they may be stored in a store apparatus for a computing apparatus to execute. In a certain situation, the illustrated or described steps may be executed in a sequence different from here, or they may be made into each integrated circuit module, or multiple modules or steps in them may be made into a single integrated circuit module for implementation. In this way, the disclosure is not limited to a combination of any specific hardware and software.

All those described above are only embodiments of the disclosure and are not used to limit the disclosure; to those skilled in the art, the disclosure may have various alternations and variations. Any modification, equivalent replacement, improvement and etc. performed within the spirit and principle of the disclosure should be contained in the protection scope of the disclosure.

## Claims

1. A method for determining a scheduling policy, comprising:
determining a Quality of Service (QoS) identifier corresponding to an Asynchronous Transfer Mode (ATM) cell;
encapsulating the QoS identifier into a pseudo-wire message; and
determining a scheduling policy corresponding to the pseudo-wire message according to the QoS identifier.

2. The method according to claim 1, further comprising: before determining the QoS identifier corresponding to the ATM cell,
setting a mapping relationship between the ATM cell and the QoS identifier.

3. The method according to claim 2, wherein determining the QoS identifier corresponding to the ATM cell comprises: determining the QoS identifier corresponding to the ATM cell according to a Virtual Path Identifier (VPI) / Virtual Channel Identifier (VCI) value in the ATM cell.

4. The method according to claim 3, wherein determining the QoS identifier corresponding to the ATM cell according to the VPI/VCI value in the ATM cell comprises:
judging whether the QoS identity matching the VPI/VCI value in the ATM cell exists according to the mapping relationship;
if the matched QoS identifier exists, then determining the QoS identifier corresponding to the ATM cell; and
if the matched QoS identifier does not exist, then determining a default QoS identifier as the QoS identifier corresponding to the ATM cell.

5. The method according to claim 4, wherein a value of the default QoS identifier is 5.

6. The method according to claim 2, wherein setting the mapping relationship between the ATM cell and the QoS identifier comprises:
setting, through a port mapping way, and/or a Virtual Passage Connection (VPC) mapping way, and/or a Virtual Channel Connection (VCC) mapping way, the mapping relationship between the ATM cell and the QoS identifier.

7. The method according to claim 6, wherein the port mapping way is building the mapping relationship between the ATM cell on a port and the same QoS identifier.

8. The method according to claim 6, wherein the VPC mapping way is building the mapping relationship between the ATM cell on a port of which the VPI value is equal to a first assigned value, and the same QoS identifier.

9. The method according to claim 6, wherein the VCC mapping way is building a mapping relationship between all the ATM cells on a port of which the VPI/VCI values are equal to the first assigned value/a second assigned value, and the same QoS identifier.

10. The method according to any one of the claims 1-9, wherein encapsulating the QoS identifier into the pseudo-wire message comprises:
if a corresponding relationship between the QoS identifier and the pseudo-wire message is one-to-one, encapsulating the QoS identifier into the pseudo-wire message; and
if the corresponding relationship between the QoS identifier and the pseudo-wire message is many-to-one, then selecting one QoS identifier from multiple QoS identities, and encapsulating the selected QoS identifier into the pseudo-wire message.

11. The method according to claim 10, wherein selecting one QoS identifier from multiple QoS identities comprises:
selecting one QoS identifier from the multiple QoS identities according to a priority selection algorithm.

12. The method according to any one of the claims 1-9, wherein encapsulating the QoS identifier into the pseudo-wire message comprises:
encapsulating the QoS identifier into an EXP field of the pseudo-wire message.

13. The method according to any one of the claims 1-9, further comprising: after determining the scheduling policy corresponding to the pseudo-wire message according to the QoS identifier,
performing a priority scheduling operation on the pseudo-wire message according to the scheduling policy.

14. An apparatus for determining a scheduling policy, comprising:
an identifier determining module, configured to determine a Quality of Service (QoS) identifier corresponding to an Asynchronous Transfer Mode (ATM) cell;
an encapsulating module, configured to encapsulate the QoS identifier into a pseudo-wire message; and
a policy determining module, configured to determine a scheduling policy corresponding to the pseudo-wire message according to the QoS identifier.

15. The apparatus according to claim 14, further comprising:
a mapping relationship setting module, configured to set a mapping relationship between the ATM cell and the QoS identifier.

16. The apparatus according to claim 15, wherein the identifier determining module comprises:
an identifier determining unit, configured to determine the QoS identifier corresponding to the ATM cell according to a Vitual Path Identifier (VPI)/Virtual Channel Identifier (VCI) value in the ATM cell.

17. The apparatus according to claim 16, wherein the identifier determining unit comprises:
an identifier judging subunit, configured to judge whether the QoS identifier matching the VPI/VCI value in the ATM cell exists according to the mapping relationship;
a first determining subunit, configured to, when a judgment result of the identifier judging subunit is that the matched QoS identifier exists, determine the QoS identifier corresponding to the ATM cell; and
a second determining subunit, configured to, when the judgment result of the identifier judging subunit is that the matched QoS identifier does not exist, determine a default QoS identifier as the QoS identifier corresponding to the ATM cell.

18. The apparatus according to any one of claims 14-17, wherein the encapsulating module comprises:
a first encapsulating unit, configured to, when a corresponding relationship between the QoS identifier and the pseudo-wire message is one-to-one, encapsulate the QoS identifier into the pseudo-wire message; or
a second encapsulating unit, configured to, when the corresponding relationship between the QoS identifier and the pseudo-wire message is many-to-one, select one QoS identifier from multiple QoS identities, and encapsulate the selected QoS identifier into the pseudo-wire message.

19. The apparatus according to claim 18, wherein the second encapsulating unit is configured to, when selecting one QoS identifier from the multiple QoS identities, select one QoS identifier from the multiple said QoS identities according to a priority selection algorithm.

20. The apparatus according to any one of claims 14-17, further comprising:
a scheduling module, configured to perform a priority scheduling operation on the pseudo-wire message according to the scheduling policy.
